Europäisches Patentamt

European Patent Office

Office européen des brevets

(11) Publication number: **0 393 698**
**A2**

## (12) EUROPEAN PATENT APPLICATION

(21) Application number: 90107526.7

(51) Int. Cl.⁵: **G01S 13/90, G01S 13/66**

(22) Date of filing: 20.04.90

(30) Priority: 21.04.89 IT 4787389

(43) Date of publication of application:
24.10.90 Bulletin 90/43

(84) Designated Contracting States:
AT CH DE FR GB LI NL SE

(71) Applicant: SELENIA INDUSTRIE
ELETTRONICHE ASSOCIATE S.p.A.
Via Tiburtina, KM 12.400
I-00131 Roma(IT)

(72) Inventor: **Marini, Stefano**
**Via Monte Gran Paradiso No. 28**
**Guidonia di Roma(IT)**
Inventor: **Prodi, Francesco**
**Via Antonio Pisano detto il, Pisanello No. 33**
**I-56123 Pisa(IT)**

(74) Representative: **Gustorf, Gerhard, Dipl.-Ing.**
**Patentanwalt Dipl.-Ing. Gerhard Gustorf**
**Bachstrasse 6 A**
**D-8300 Landshut(DE)**

(54) Device for improving radar resolution.

(57) A device for processing radar signals has the capability of obtaining single or multiple target information as well as target length by utilizing relative radar-target movement. The device includes a radar receiver; an Inverse Synthetic Aperture Radar processor; a list sensor for supplying listing data to the Inverse Synthetic Aperture Radar; an element for estimating the presence of one or more targets as well as target length; a radar pursuit loop for estimating parameters of target motion; and a display unit for displaying selected information.

FIG. 1

## Device for improving radar resolution

The present invention relates to a device for processing radar signals, specifically a pursuit radar.

An object of the invention is to obtain single or multiple target information as well as target length by utilizing the relative radar-target movement.

The device of the invention is believed applied best downstream of an A/D converter of a pursuit radar, and it has the purpose of improving the transverse resolution capacity. For this purpose, the ISAR (Inverse Synthetic Aperture Radar) technique can be employed, which makes it possible to generate a synthetic antenna of a length equal to the space passed over by the target during the observation period.

For each pulse transmitted, the radar echo signal is memorized in the in phase and quadrature components so as to maintain the phase information. The sequence of the echo signals coincides with that which would be received by a mobile antenna that would occupy the successive positions of the object, in such a manner as to have the same relative geometry.

The fundamental process of the ISAR technique consists of compensating for the relative movement between radar antenna and target. This motion is given by the composition of the absolute movements of the target and of the antenna; the latter assumes particular importance in naval application due to the possible listings of the platform.

The invention concerns an application of the ISAR technique to a pursuit radar, whether land or naval, for recognition of the presence of single or multiple targets, as well as for an estimate of the length of the target itself. While the device described finds what is believed its best application in a pursuit radar system, this does not preclude the device being applied to other types of radar.

More specifically, the inventive device ray be inserted downstream of the analog-digital converter of a radar, particularly in a pursuit radar. It is formed essentially of a circuit which, for each pulse transmitted, memorizes the in phase and quadrature of the sum channel of the radar which correspond to a certain observation time interval. With the synchronism established by a suitable timing circuit, the values of the repetition period of the pulses, of the frequency transmitted, or of the distance away of the target are memorized.

The data memorized are processed in accordance with ISAR (Inverse Synthetic Aperture Radar) technique. This processing consists in motion compensation followed by transverse compression. An automatic system then decides the presence of a single or multiple target. The length of the target is then determined by combining the compressed data and the data on the trajectory which are supplied by the pursuit loop of the radar. The information as to multiplicity of the target, its length and, in particular, the profile of the transverse reflectivity with respect to the radar-target combination, are finally obtained by a suitable decider. These data are then displayed on a display unit.

The invention will now be described, by way of illustration and not of limitation, with reference to the accompanying drawing, in which:

Fig. 1 is a block diagram of a device forming the object of the present invention and its insertion in a radar.

Fig. 2 shows, in detail, the structure of the ISAR processor of Fig. 1 (block 4) in its essential components.

Fig. 3 shows, in detail, the structure of the estimator 13 of the parameters of target motion of Fig. 2.

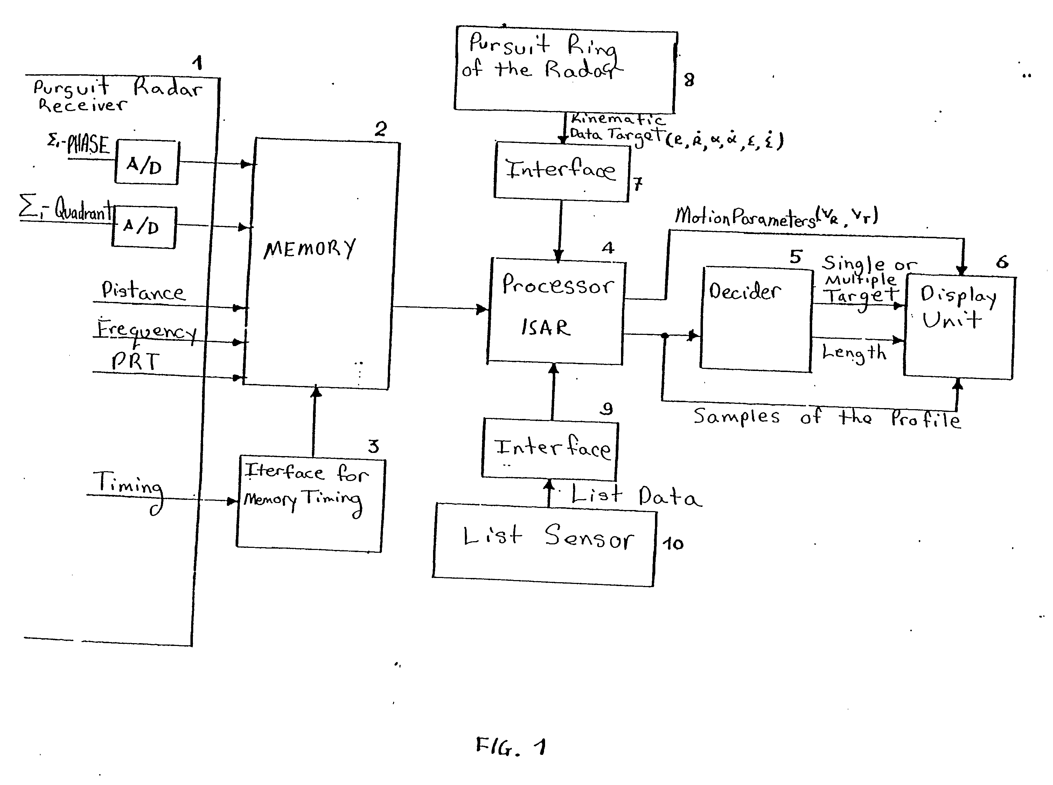

The inventive device of Fig. 1 comprises a radar receiver 1; a memory circuit 2; an interface 3 for memory timing; an ISAR processor 4; an interface 7 with pursuit ring of the radar 8; an interface 9 with a list sensor 10; a decision element 5; and a display unit 6. The inventive device receives, at an input, data in phase and quadrature of the sum channel of the radar receiver 1. For each period of repetition of the pulses, a complex sample is memorized. These data are memorized in the memory 2 together with the data on the distance, frequency and period of repetition coming from the receiver 1. The qualifying for the recording of the memory 2 is supplied by the interface 3 which, in turn, receives at the input a "trigger" corresponding to the distance away of the target. The data memorized in the memory 2 and corresponding to a given period of observation are then processed by the ISAR processor 4. This processor uses as information the listing data of the platform coming from the list sensor 10 via the interface 9. From the pursuit "loop" of the radar 8, it receives the estimate of the parameters of target motion through the interface 7. These data are the three position components (distance, azimuth and elevation) and their derivatives with respect to time.

The ISAR 4 processor supplies at its output the samples of the transverse profile of the target. This processing, parallel with this, gives accurate estimates of the radial and transverse components of the speed of the target.

The samples of the transverse profile are sent to the decider 5, which establishes whether the target is single or multiple and additionally determines its length. The accurate estimate of the radial and transverse components of the speed, the samples of the transverse profile, the single or multiple target information, and the target length are displayed on a suitable display unit 6.

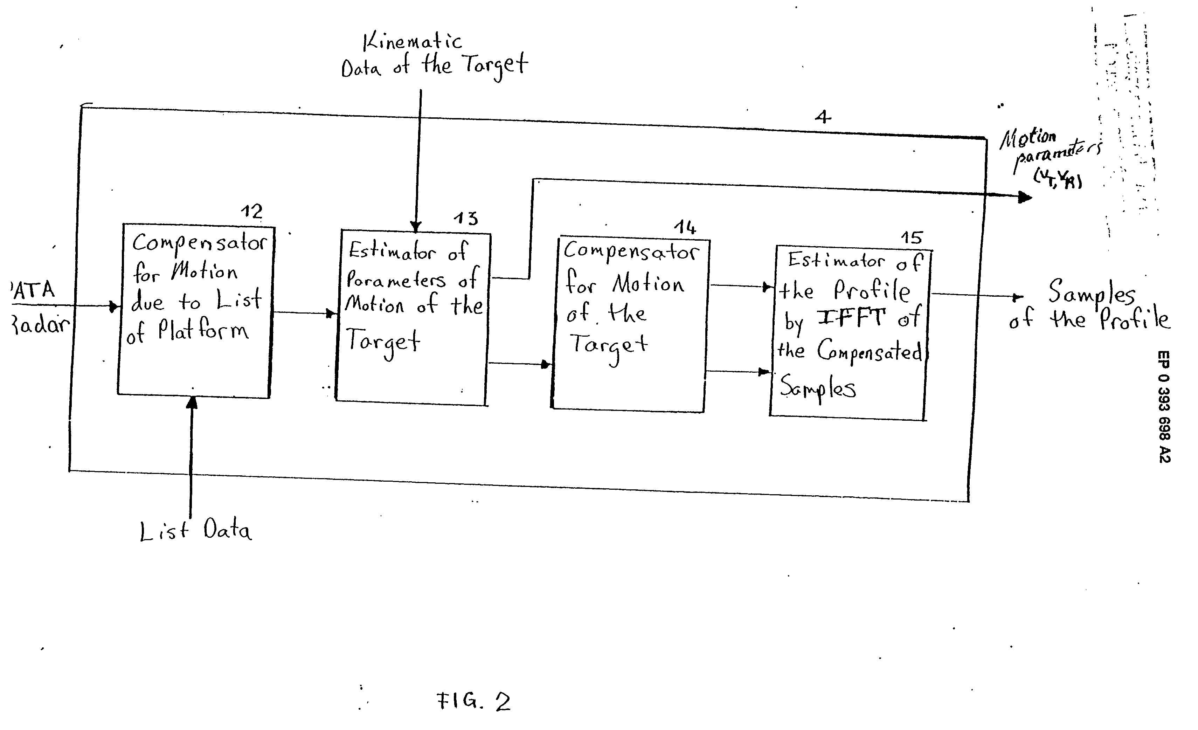

Fig. 2 is a diagram of the ISAR processor 4 in greater detail. Fig. 2 shows a compensator 12 for motion due to the listing of the platform; an estimator 13 of parameters of the motion of the target; a compensator 14 of the movement of the target; an estimator 15 of the profile by IFFT of the compensated samples; list data d; and samples c of the profile. In Fig. 2, the fundamental process occurring in the ISAR processor 4 comprises compensating the motion, which consists in subtracting from the phase of the signal memorized in the memory 2 the phase relative to a reference point on the target. The radar data are initially compensated by the component of the relative radar-target motion induced by the list of the platform. This function is carried out by the block 12. Of course, this block is excluded in radar applications on stationary platforms of the land radar type.

The variation of the phase of the reference point, in the event of uniform linear motion, is parameterized with a polynomial of the second degree, the coefficients of which are estimated by the estimator 13. These coefficients depend on the parameters of the motion of the reference point and are the average radar-target distance and the radial and tangential components of the speed. This phase is subtracted from the recorded samples phase, already reduced by the phase due to the list, by the block 14. In this way, the samples thus obtained are compensated for the motion of the target.

The compensating of the motion effected by the block 14 also utilizes the geometrical-kinematic data supplied by the control ring of the pursuit radar in order to resolve possible ambiguities of the radial speed and to make the estimate of the parameters of the motion more efficient.

The profile of the target is reconstructed by the block 15 as IFFT (Inverse Fast Fourier Transform) of the compensated samples.

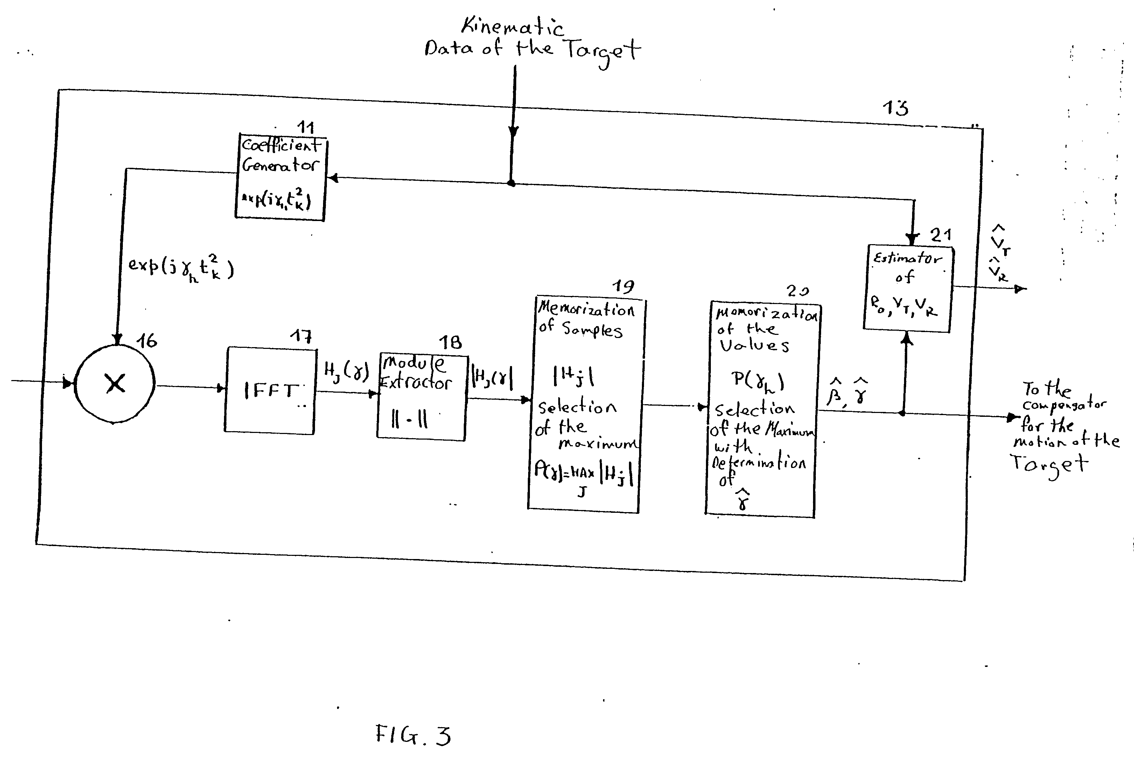

The details of the estimator 13 of the parameters of the motion of the target are set forth in Fig. 3. Such figures show a coefficient generator 11; a complex multiplier 16; an IFFT element 17; a module extractor 18; an element 18 for memorization of the samples and selection of the maximum; an element 20 for memorization of the values and selection of the maximum; an estimate 21 of Ro, Vt, Vr: kinematic data dc of the target; and connection cm to the target motion compensator.

The input to block 13 is formed by the sequence of the data recorded and already compensated for the listing of the platform. These data are compensated several times with a time phase term $\exp(j\beta_i t_k + \gamma_h t_k^2)$ in which $t_k$ represents the sequence of the moments of sampling of the signal and $\beta_i$ and $\gamma_h$ are the coefficients respectively of the polynomial which parameterizes the phase of the reference point.

Initially, the input data are compensated for the quadratic term phase $\exp(j\gamma_h t_k^2)$ generated in the block 11 by the multiplier 16. Thereupon the data thus compensated are further compensated by the linear phase term $\exp(j\beta_i t_k)$. This latter compensation is effected in efficient manner as IFFT by the block 17. This block also effects the coherent sum of the compensated samples. From the samples $H_j$ the module is extracted by the block 18. The block 19 effects the selection of the maximum value of such modules for each value $\gamma_h$. This maximum value $P(\gamma_h)$ is transferred to the block 20 and memorized in it. These operations are repeated for the $\gamma_h$ values so as to cover the variability interval. The estimate $\hat{\gamma}_h$ is then caused to coincide with the value $\gamma_h$ which makes $P(\gamma_h)$ maximum. The block 21 receives at the inlet the estimate $\hat{\beta}, \hat{\gamma}$ determined by the processing just described and the distance estimates Ro and velocity components $V_t$ and $V_R$ supplied by the control ring of the radar. These quantities are used to determine accurate values of the radial and transverse speed of the target to be sent to the utilization device.

It should be understood that the preferred embodiments and examples described are for illustrative purposes only and are not to be construed as limiting the scope of the present invention which is properly delineated only in the appended claims.

## Claims

1. Device for processing radar signals that has the capability of obtaining single or multiple target information as well as target length by utilizing relative radar - target movement, the device comprising:
a radar receiver;
an Inverse Synthetic Aperture Radar processor (4);
a list sensor (10) for supplying listing data to the Inverse Synthetic Aperture Radar;
an element (5) for estimating the presence of one of more targets as well as target length;
a radar pursuit loop (8) for estimating parameters of target motion; and
a display unit (6) for displaying said information.

2. Device for processing radar signals according to claim 1, wherein the Inverse Synthetic Aperture Radar processor (ISAR) comprises:
a compensator (12) for motion due to platform listing;
an estimator (13) of the parameters of target motion;

a compensator (14) of target motion; and
an estimator (15) of the profile by Inverse Fast Fourier Transform of the compensated samples.

3. Device for processing radar signals according to claim 1 or 2, wherein the estimator (13) of the parameters of the target motion comprises:

a multiplier circuit (16);

a circuit (17) for calculating an inverse Fourier transform;

a complex sample module (18);

a sample memorizer (19);

a value memorizer (20); and

a circuit (21) for estimating the distance away and the radial and tangential velocity components.

Pursuit Radar Receiver — 1

$\Sigma_i$-PHASE — A/D

$\Sigma_i$-Quadrant — A/D

Distance

Frequency

PRT

Timing

MEMORY — 2

Iterface for Memory Timing — 3

Pursuit Ring of the Radar — 8

Kinematic Data Target $(\varrho, \dot{\varrho}, \alpha, \dot{\alpha}, \varepsilon, \dot{\varepsilon})$

Interface — 7

Processor ISAR — 4

Interface — 9

List Data

List Sensor — 10

Motion Parameters $(v_R, v_r)$

Decider — 5

Single or Multiple Target

Length

Samples of the Profile

Display Unit — 6

FIG. 1

Kinematic Data of the Target

4

Motion parameters $(v_T, Y_R)$

**12** Compensator for Motion due to List of Platform

**13** Estimator of Parameters of Motion of the Target

**14** Compensator for Motion of the Target

**15** Estimator of the Profile by IFFT of the Compensated Samples

DATA Radar

List Data

Samples of the Profile

EP 0 393 698 A2

FIG. 2

Kinematic Data of the Target

13

11 Coefficient Generator
$a_k f(i\, \chi_i t_k^2)$

$\exp(j\, \gamma_h t_k^2)$

16 ×

17 IFFT

$H_J(\gamma)$

18 Module Extractor $|H_J(\gamma)|$
$\| \cdot \|$

19 Memorization of Samples
$|H_{\gamma j}|$
Selection of the maximum
$P(\gamma) = \max_{J} |H_{\gamma j}|$

20 Memorization of the Values
$P(\gamma_h)$
Selection of the Maximum with Determination of $\hat{\gamma}$

$\hat{\beta}, \hat{\gamma}$

21 Estimator of $\rho_0, \gamma_T, V_R$

$\hat{V}_T$
$\hat{V}_R$

To the compensator for the motion of the Target

FIG. 3